# EUROPÄISCHE PATENTSCHRIFT

(11) **EP 0 929 963 B1**
(45) Veröffentlichungstag und Bekanntmachung des Hinweises auf die Patenterteilung: **17.03.2004**
(21) Anmeldenummer: 97912028.4
(22) Anmeldetag: 26.09.1997
(51) Int. Cl.: H04M 3/42, H04Q 3/62

(54) **VERFAHREN ZUM STEUERN EINER SAMMELANSCHLUSSKONFIGURATION EINER KOMMUNIKATIONSANLAGE**
METHOD FOR CONTROLLING A COLLECTIVE LINE CONFIGURATION OF A TELECOMMUNICATIONS INSTALLATION
PROCEDE POUR COMMANDER UNE CONFIGURATION DE LIGNES GROUPEES D'UNE INSTALLATION DE TELECOMMUNICATION

(30) Priorität: 30.09.1996 DE 19640406
(43) Veröffentlichungstag der Anmeldung: 21.07.1999
(73) Patentinhaber: SIEMENS AKTIENGESELLSCHAFT, 80333 München (DE)
(72) Erfinder: KOPITAR, Friedrich, A-3492 Etsdorf (AT); RECHBERGER, Peter, A-1210 Wien (AT); POCHMANN, Alois, A-1190 Wien (AT); LEBDUSKA, Christian, A-1030 Wien (AT)
(86) Internationale Anmeldenummer: PCT/DE1997/002220
(87) Internationale Veröffentlichungsnummer: WO 1998/015101

(56) Entgegenhaltungen:
- WO-A-94/23526
- DE-A- 4 330 755
- DE-U- 9 201 180
- US-A- 5 029 196
- BOOM W ET AL: "NEW GROUP FEATURE COLLECTION FOR SOPHO-S ISPBXS" PHILIPS TELECOMMUNICATION REVIEW, Bd. 51, Nr. 3, 1.Dezember 1993, Seiten 10-16, XP000457193
- BOLTJES C J: "FACILITIES FOR USERS OF SOPHO-SET FEATURE PHONES" PHILIPS TELECOMMUNICATION REVIEW, Bd. 48, Nr. 1, 1.März 1990, Seiten 20-27, XP000116333

## Beschreibung

Die Erfindung betrifft ein Verfahren zum Steuern einer aus einem Master-Endgerät und mehreren Sammelanschluß-Endgeräten bestehenden Sammelanschlußkonfiguration einer Kommunikationsanlage, bei der ein für das Master-Endgerät kommender Ruf im Normalzustand sowohl an dem Master-Endgerät als auch an den Sammelanschluß-Endgeräten entgegengenommen werden kann. Solche Sammelanschlußkonfiguration sind als Endgerätekonfiguration von Nebenstellenanlagen, wie z.B. der von der Siemens AG kommerziell vertriebenen Anlage HICOM, bekannt. Bei solchen digitalen Nebenstellenanlagen und bei solchen globalen ISDN-Netzen wird jeweils die Rufnummer des rufenden Teilnehmers übermittelt und steht somit einer Vermittlungseinrichtung zum Vermitteln kommender Rufe zum Master-Endgerät oder zu den Sammelanschluß-Endgeräten zur Verfügung. Bekannte Sammelanschlußkonfigurationen beziehen eine Gruppe von Endgeräten ein, die bezüglich einer bestimmten Rufadresse als Sammelanschluß konfiguriert sind, die meist aber auch über eigene Rufadressen unmittelbar anwählbar sind. Es gibt Sammelanschlußkonfigurationen, in denen ein Endgerät Master-Endgerät ist. Hierbei ist es durchaus möglich, daß in derselben Gruppe von Endgeräten eines bezüglich einer ersten Rufadresse Master-Endgerät ist und ein anderes bezüglich einer zweiten Rufadresse Master-Endgerät ist.

Es sind auch digitale Nebenstellenanlagen mit einem Leistungsmerkmal "Selektiver Anrufschutz" oder "Selektive Anrufumleitung" bekannt, bei denen in einem Speicher eine einem Endgerät zugeordnete priorisierte Rufnummer speicherbar ist. Bei Übereinstimmung dieser gespeicherten, priorisierten Rufnummer mit der Rufnummer des rufenden Teilnehmers eines für das Endgerät kommenden Rufs werden entweder die Anrufschutzfunktion oder die Anrufumleitungsfunktion nicht ausgeführt, sondern der Ruf wird zu dem Endgerät vermittelt.

Aufgabe der Erfindung ist es, die Funktionsweise einer Sammelanschlußkonfiguration komfortabler zu gestalten, insbesondere dem Benutzer eines Master-Endgeräts der Sammelanschlußkonfiguration mehr Freiheitsgrade einzuräumen.

Diese Aufgabe löst die Erfindung durch ein verfahren mit den Merkmalen des Anspruches 1. Günstige Ausgestaltungen sind Gegenstand von Unteransprüchen.

Bei einem erfindungsgemäßen Verfahren zum Steuern einer aus einem Master-Endgerät und mehreren Sammelanschluß-Endgeräten bestehenden Sammelanschlußkonfiguration einer Kommunikationsanlage, bei der ein für das Master-Endgerät kommender Ruf im Normalzustand sowohl an dem Master-Endgerät als auch an den Sammelanschluß-Endgeräten entgegengenommen werden kann, wird bei im Normalzustand der Sammelanschlußkonfiguration für das Master-Endgerät kommendem Ruf überprüft, ob die der Kommunikationsanlage übermittelte Rufnummer des rufenden Teilnehmers mit einer dem Master-Endgerät zugeordneten priorisierten, in einem Speicher gespeicherten Rufnummer übereinstimmt. Die Kommunikationsanlage vermittelt den kommenden Ruf bei Übereinstimmung nur zum Master-Endgerät und nicht zu den Sammelanschluß-Endgeräten.

Der Rufnummernvergleich kann hierbei abhängig von der Art der Vermittlungseinrichtung bzw. der Kommunikationsanlage entweder durch die Vermittlungssteuerung oder durch eine spezielle Leistungsmerkmalsteuerung erfolgen.

Die Erfindung ermöglicht es dem Benutzer eines Master-Endgerätes, Anrufe von ihm wichtig erscheinenden Teilnehmern, wie z.B. einem vorgesetzen oder einem Familienmitglied unmittelbar selbst entgegenzunehmen.

In einer günstigen Ausgestaltungsform eines erfindungsgemäßen Verfahrens ist darüber hinaus vorgesehen, daß bei für das Master-Endgerät aktiviertem Leistungsmerkmal "Anrufumleitung zur Voicemail", das ein Verbinden für den Sammelanschluß kommender Rufe zu einer Anrufbeantworterfunktion bewirkt, ebenfalls die Rufnummer des rufenden Teilnehmers mit den gespeicherten priorisierten Rufnummern verglichen wird und daß der kommende Ruf bei Übereinstimmung an das Master-Endgerät vermittelt wird.

In einer anderen Weiterbildung eines erfindungsgemäßen Verfahrens wird auch dann, wenn für den Sammelanschluß, beispielsweise nach Dienstschluß, ein Leistungsmerkmal "Anrufschutz" aktiviert ist, bei einem für das Master-Endgerät kommendem Ruf die Rufnummer des rufenden Teilnehmers mit den gespeicherten priorisierten Rufnummern verglichen und ein kommender Ruf wird bei Übereinstimmung an das Master-Endgerät vermittelt.

Das Leistungsmerkmal "Anrufschutz" bewirkt üblicherweise, daß für den Sammelanschluß kommende Rufe zu einem gewählten Ziel vermittelt werden. Die letztgenannte Weiterbildung eines erfindungsgemäßen Verfahrens ermöglicht es folglich dem Benutzer eines Master-Endgerätes, auch bei Aktivieren des Leistungsmerkmals "Anrufschutz" ihm wichtig erscheinende kommende Rufe entgegenzunehmen.

Wenn in einer Sammelanschlußkonfiguration für das Master-Endgerät das Leistungsmerkmal "Anrufumleitung im Besetztfall" aktiviert ist, so werden für das Master-Endgerät kommende Rufe üblicherweise zu einem gewählten Ziel, z.B. den übrigeen Sammelanschlußteilnehmern, vermittelt, sofern das Master-Endgerät sich im Besetztzustand befindet. Eine besonders günstige Weiterbildung eines erfindungsgemäßen Verfahrens sieht vor, daß bei für das Master-Endgerät aktiviertem Leistungsmerkmal "Anrufumleitung im Besetztfall" bei für das Master-Endgerät kommendem Ruf die Rufnummer des rufenden Teilnehmers mit den gespeicherten priorisierten Rufnummern verglichen wird und daß der kommende Ruf bei Übereinstimmung an dem Master-Endgerät durch eine Anklopffunktion signalisiert wird.

Eine andere Weiterbildung eines erfindungsgemäßen Verfahrens sieht vor, daß bei für das Master-Endgerät kommendem Ruf, wenn das Master-Endgerät sich im Besetztzustand befindet, die Rufnummer des rufenden Teilnehmers mit den gespeicherten priorisierten Rufnummern verglichen wird und daß die Rufnummer oder der Name des rufenden Teilnehmers bei Übereinstimmung auf einer Anzeigeeinrichtung des Master-Endgeräts angezeigt wird.

Die letztgenannten Ausgestaltungen eines erfindungsgemäßen Verfahrens ermöglichen es dem Benutzer des Master-Endgerätes einer Sammelanschlußkonfiguration, von ihm wichtig erscheinenden kommenden Rufen Kenntnis zu erhalten, auch wenn er das Master-Endgerät bereits belegt hat.

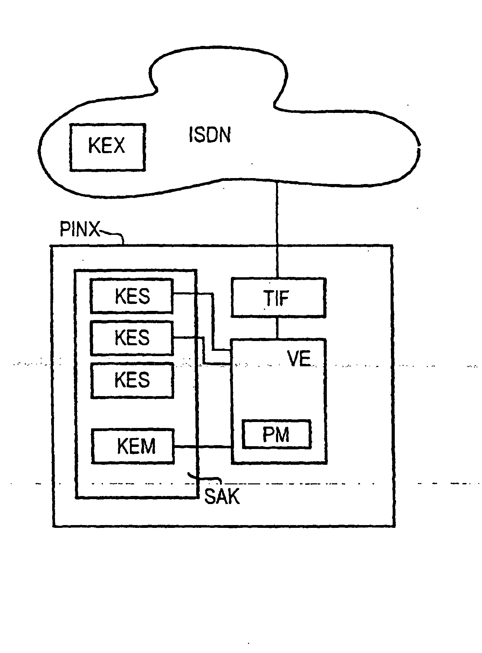

Nachstehend wird die Erfindung anhand eines Ausführungsbeispiels unter Bezugnahme auf die Figur näher erläutert.

Die Figur zeigt in schematischer Darstellung das Blockschaltbild einer Kommunikationsanalge PINX mit einer Sammelanschlußkonfiguration SAK als Endgerätekonfiguration. Die Sammelanschlußkonfiguration SAK enthält hierbei ein Master-Endgerät KEM und drei Sammelanschlußendgeräte KES, die jeweils mit einer Vermittlungseinrichtung VE der Kommunikationsanalge PINX verbunden sind. Die Vermittlungseinrichtung VE enthält außerdem einen Speicher PM zum Speichern von dem Master-Endgerät KEM zugeordneten priorisierten Rufnummern. Die Vermittlungseinrichtung VE ist über eine Netzschnittstelle TIF mit einem glöbalen ISDN-Netz ISDN verbunden, das ein für die Kommunikationsanlage PINX externes Endgerät KEX enthält.

Im Normalzustand, wenn also keine Sonderfunktionen in der Kommunikationsanlage PINX eingestellt sind, kann ein beispielsweise vom externen Endgerät KEX an die Adresse des Master-Endgerätes KEM kommender Ruf von allen Endgeräten KEM, KES der Sammelanschlußkonfiguration SAK entgegengenommen werden. Hierbei ist konfigurierbar, ob für einen für das Master-Endgerät KEM kommenden Ruf zuerst für eine bestimmte Zeitdauer ein Vermittlungsversuch zum Master-Endgerät KEM ausgeführt wird und nach Ablauf dieser Zeitdauer ein Vermittlungsversuch zu allen Endgeräten KEM, KES der Sammelanschlußkonfiguration SAK versucht wird, oder ob ein kommender Ruf unmittelbar bei allen Endgeräten KEM, KES der Sammelanschlußkonfiguration SAK signalisiert wird.

Wenn gemäß einem erfindungsgemäßen Verfahren die mit dem kommenden Ruf übermittelte Rufnummer des rufenden Teilnehmers mit einer im Speicher PM für das Master-Endgerät KEM abgelegten priorisierten Rufnummer übereinstimmt, wird dieser kommende Ruf jedoch unmittelbar und nur zu dem Master-Endgerät KEM der Sammelanschlußkonfiguration SAK vermittelt.

## Patentansprüche

1. Verfahren zum Steuern einer aus mehreren Sammelanschluß-Endgeräten (KES) bestehenden Sammelanschlußkonfiguration (SAK) einer Kommunikationsanlage (PINX),
a) die ein Master-Endgerät (KEM) aufweist, wobei ein kommender Ruf im Normalzustand sowohl an dem Master-Endgerät (KEM) als auch an den Sammelanschluß-Endgeräten (KES) entgegengenommen werden kann,
b) bei dem die Rufnummer des rufenden Teilnehmers der Kommunikationsanlage (PINX) übermittelt wird und in einem Speicher (PM) mindestens eine dem Master-Endgerät (KEM) zugeordnete priorisierte Rufnummer speicherbar ist,
c) bei dem bei einem für die Sammelanschlußkonfiguration (SAK) kommendem Ruf überprüft wird, ob die Rufnummer des rufenden Teilnehmers mit einer priorisierten Rufnummer im Speicher (PM) übereinstimmt
d) und bei dem die Kommunikationsanlage (PINX) den kommenden Ruf bei Übereinstimmung nur zum Master-Endgerät (KEM) und nicht zu den Sammelanschluß-Endgeräten (KES) vermittelt.

2. Verfahren nach Anspruch 1,
**dadurch gekennzeichnet,**
**daß** bei für das Master-Endgerät (KEM) aktiviertem Leistungsmerkmal "Anrufumleitung zur Voicemail", das ein Verbinden für das Master-Endgerät (KEM) kommender Rufe zu einer Anrufbeantworterfunktion bewirkt, bei für das Master-Endgerät (KEM) kommendem Ruf die Rufnummer des rufenden Teilnehmers mit den gespeicherten priorisierten Rufnummern verglichen wird und
**daß** der kommende Ruf bei Übereinstimmung an das Master-Endgerät (KEM) vermittelt wird.

3. Verfahren nach Anspruch 1 oder 2,
**dadurch gekennzeichnet,**
**daß** bei für das Master-Endgerät (KEM) aktiviertem Leistungsmerkmal "Anrufschutz", das ein Vermitteln für das Master-Endgerät (KEM) kommender Rufe unterbindet, bei für das Master-Endgerät (KEM) kommendem Ruf die Rufnummer des rufenden Teilnehmers mit den gespeicherten priorisierten Rufnummern verglichen wird und daß der kommende Ruf bei Übereinstimmung an das Master-Endgerät (KEM) vermittelt wird.

4. Verfahren nach Anspruch 1, 2 oder 3,
**dadurch gekennzeichnet,**
**daß** bei für das Master-Endgerät (KEM) aktiviertem Leistungsmerkmal "Anrufumleitung im Besetztfall", das ein Vermitteln für das Master-Endgerät (KEM) kommender Rufe zueinem anderen Ziel bewirkt, bei für das Master-Endgerät (KEM) kommendem Ruf die Rufnummer des rufenden Teilnehmers mit den gespeicherten priorisierten Rufnummern verglichen wird und daß der kommende Ruf bei Übereinstimmung an dem Master-Endgerät (KEM) durch eine Anklopffunktion signalisiert wird und das Vermitteln zu dem anderen Ziel nicht ausgeführt wird.

5. Verfahren nach einem der vorhergehenden Ansprüche,
**dadurch gekennzeichnet,**
**daß** bei für das Master-Endgerät (KEM) kommendem Ruf, wenn das Master-Endgerät (KEM) sich im Besetztzustand befindet, die Rufnummer des rufenden Teilnehmers mit den gespeicherten priorisierten Rufnummern verglichen wird und daß die Rufnummer oder der Name des rufenden Teilnehmers bei Übereinstimmung auf einer Anzeigeeinrichtung (AE) des Master-Endgeräts (KEM) angezeigt wird.

## Claims

1. Method for controlling a hunt group configuration (SAK) of a communication system (PINX), said configuration comprising a plurality of hunt group terminals (KES),
a) having a master terminal (KEM), an incoming call normally being answerable both at said master terminal (KEM) and at the hunt group terminals (KES),
b) wherein the directory number of the calling party is presented to the communication system (PINX) and at least one priority directory number assigned to the master terminal (KEM) can be stored in a memory (PM),
c) wherein in the event of an incoming call for the hunt group configuration (SAK) a check is performed to establish whether the calling party's directory number matches a priority directory number in the memory (PM),
d) and wherein, if a match is found, the communication system (PINX) switches the incoming call only to the master terminal (KEM) and not to the hunt group terminals (KES).

2. Method according to claim 1,
**characterised in that** when the "call forwarding to voicemail" feature is activated for the master terminal (KEM), thereby causing incoming calls for the master terminal (KEM) to be connected to an answering machine function, in the event of an incoming call for the master terminal (KEM) the directory number of the calling party is compared with the stored priority directory numbers and, if a match is found, the incoming call is switched to the master terminal (KEM).

3. Method according to claim 1 or 2,
**characterised in that** when a "do-not-disturb" feature is activated for the master terminal (KEM), thereby preventing incoming calls from being switched to the master terminal (KEM), in the event of an incoming call for the master terminal (KEM) the directory number of the calling party is compared with the priority directory numbers stored and, if a match is found, the incoming call is switched to the master terminal (KEM).

4. Method according to claim 1, 2 or 3,
**characterised in that** when a "call forwarding on busy" feature is activated for the master terminal (KEM), causing incoming calls for the master terminal (KEM) to be switched to another destination, in the event of an incoming call for the master terminal (KEM) the calling party's directory number is compared with the priority directory numbers stored and, if a match is found, the incoming call is signalled to the master terminal (KEM) by means of a call waiting function and switching to another destination is not performed.

5. Method according to one of the preceding claims,
**characterised in that**, in the event of an incoming call for the master terminal (KEM) when the master terminal (KEM) is in the busy condition, the calling party's directory number is compared with the priority directory numbers stored and, if a match is found, the calling party's directory number or name is indicated on a display device (AE) of the master terminal (KEM).

## Revendications

1. Procédé destiné à contrôler une configuration (SAK) de lignes groupées composées de plusieurs terminaux (KES) de lignes groupées dans une installation de communication (PINX)
a) qui comporte un terminal maître (KEM), un appel en arrivée pouvant être, dans l'état normal, pris en charge non seulement sur le terminal maître (KEM), mais aussi sur les terminaux (KES) de lignes groupées,
b) dans lequel le numéro d'appel de l'abonné appelant de l'installation de communication (PINX) est transmis et au moins un numéro d'appel prioritaire affecté au terminal maître (KEM) peut être mémorisé dans une mémoire (PM),
c) dans lequel, dans le cas d'un appel en arrivée destiné à la configuration (SAK) de lignes groupées, on vérifie si le numéro d'appel de l'abonné appelant concorde avec un numéro d'appel prioritaire enregistré dans la mémoire (PM)
d) et dans lequel l'installation de communication (PINX) ne commute, en cas de concordance, l'appel en arrivée que vers le terminal maître (KEM) et non vers les terminaux (KES) de lignes groupées.

2. Procédé selon la revendication 1
**caractérisé par le fait**
**que**, si la caractéristique d'exploitation "déroutage des appels vers le répondeur-enregistreur (ou, en anglais, voicemail)", qui provoque le renvoi des appels en arrivée destinés au terminal maître vers une fonction de répondeur téléphonique, est activée pour le terminal maître (KEM), et si un appel arrive pour le terminal maître (KEM), le numéro d'appel de l'abonné appelant est comparé aux numéros d'appel prioritaires mémorisés et
**que**, en cas de concordance, l'appel en arrivée est commuté sur le terminal maître (KEM).

3. Procédé selon la revendication 1 ou 2
**caractérisé par le fait**
**que**, si la caractéristique d'exploitation "protection contre les appels", qui empêche la commutation d'appels en arrivée vers le terminal maître (KEM), est activée pour le terminal maître (KEM) et si un appel arrive pour le terminal maître (KEM), le numéro d'appel de l'abonné appelant est comparé aux numéros d'appel prioritaires mémorisés et
**que**, en cas de concordance, l'appel en arrivée est commuté sur le terminal maître (KEM).

4. Procédé selon la revendication 1, 2 ou 3
**caractérisé par le fait**
**que**, si la caractéristique d'exploitation "déroutage des appels en cas d'occupation", qui provoque une commutation des appels en arrivée destinés au terminal maître (KEM) vers une autre destination, est activée pour le terminal maître (KEM) et si un appel arrive pour le terminal maître (KEM), le numéro d'appel de l'abonné appelant est comparé aux numéros d'appel prioritaires mémorisés et
**que**, en cas de concordance, l'appel en arrivée est signalé au terminal maître (KEM) par une fonction d'avertissement et la commutation vers une autre destination n'est pas exécutée.

5. Procédé selon l'une des revendications précédentes
**caractérisé par le fait**
**que**, si un appel arrive pour le terminal maître (KEM) lorsque le terminal maître (KEM) est occupé, le numéro d'appel de l'abonné appelant est comparé aux numéros d'appel prioritaires mémorisés et
**que**, en cas de concordance, le numéro d'appel ou le nom de l'abonné appelant est affiché sur un dispositif d'affichage (AE) du terminal maître (KEM).
